# EUROPEAN PATENT SPECIFICATION

(11) **EP 3 057 374 B1**
(45) Date of publication and mention of the grant of the patent: **27.02.2019**
(21) Application number: 14851460.7
(22) Date of filing: 07.10.2014
(51) Int. Cl.: H04W 76/10, H04W 36/00, H04L 29/12

(54) **COMMUNICATION SYSTEM, COMMUNICATION DEVICE, AND COMMUNICATION CONTROL METHOD**
KOMMUNIKATIONSSYSTEM, KOMMUNIKATIONSVORRICHTUNG UND KOMMUNIKATIONSSTEUERUNGSVERFAHREN
SYSTÈME DE COMMUNICATION, DISPOSITIF DE COMMUNICATION, ET PROCÉDÉ DE CONTRÔLE DE COMMUNICATION

(30) Priority: 09.10.2013 JP 2013211715
(43) Date of publication of application: 17.08.2016
(73) Proprietor: NEC Corporation, Tokyo 108-8001 (JP)
(72) Inventor: MIZUKOSHI, Yasuhiro, Tokyo 108-8001 (JP); FUJINAMI, Makoto, Tokyo 108-8001 (JP); YAMADA, Yoshiyuki, Tokyo 108-8001 (JP)
(74) Representative: MacDougall, Alan John Shaw
(86) International application number: PCT/JP2014/005098
(87) International publication number: WO 2015/052917

(56) References cited:
- JP-A- 2014 116 720
- KONSTANTINOS SAMDANIS ET AL: "Traffic Offload Enhancements for eUTRAN", IEEE COMMUNICATIONS SURVEYS AND TUTORIALS, INSTITUTE OF ELECTRICAL AND ELECTRONICS ENGINEERS, US, vol. 14, no. 3, 1 July 2012 (2012-07-01), pages 884-896, XP011454973, ISSN: 1553-877X, DOI: 10.1109/SURV.2011.072711.00168
- STARENT NETWORKS: "Selected IP Traffic Offload for UMTS at IuPS", 3GPP DRAFT; S2-097216_WAS S2-097025_STAR_SIPTO FOR UMTS AT IUPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Cabo; 20091116, 16 November 2009 (2009-11-16), XP050398003, [retrieved on 2009-11-17]
- HUAWEI: "Alternatives for Variant 1 of Solution 1 for LIPA", 3GPP DRAFT; S2-100233 ALTERNATIVES FOR VARIANT 1 OF SOLUTION 1 FOR LIPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432826, [retrieved on 2010-01-12]
- RESEARCH IN MOTION: "AMBR Enforcement Procedures", 3GPP DRAFT; S2-084168 S2-083733 CR FOR AMBR ENFORCEMENT PROCEDURES - TS23401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080513, 13 May 2008 (2008-05-13), XP050266305, [retrieved on 2008-05-13]
- CHINA MOBILE ET AL.: 'Solution 2 clarification' 3GPP TSG SA WG2 MEETING #79 TD S 2-102879 , 3GPP 10 May 2010, XP050435109
- MOTOROLA: 'Handle DNS queries in Solution 2' 3GPP TSG SA WG2 MEETING #79 TD S 2-102567 XP050434698

## Description

### [Technical Field]

The present invention relates to a communication system including a network and a communication apparatus that wirelessly communicates with terminals and, more particularly, to a communication apparatus for transferring packets between terminals and an external network, and a communication control method for the communication apparatus.

### [Background Art]

In recent years, with the proliferation of so-called smartphones, traffic of mobile terminals on the Internet has been rapidly increasing, and traffic offload technologies for reducing the load on a mobile core network have become more and more important.

For example, in 3GPP (3rd Generation Partnership Project) specifications, attention is given to a small base station supporting a traffic offload function called LIPA (Local IP Access) or SIPTO (Selected IP Traffic Offload). In LIPA, traffic between UE (User Equipment) and a host in a private network is offloaded from a base station (H(e)NB) onto the private network via a local gateway (L-GW) (see NPL 1, 5.2.3). Note that H(e)NB denotes HNB (Home Node B) or HeNB (Home-evolved Node B). Moreover, in SIPTO, it is possible to perform control for offloading the traffic of a specific APN (Access Point Name) or of a specific application, or to perform offload control based on the destination IP (Internet Protocol) address.

According to NPL 1, 5.5 (Solution 4), for SIPTO to be applied for UMTS (Universal Mobile Telecommunication Systems) macrocell or NHB subsystem (femtocell), an architecture is disclosed in which TOF (Traffic Offload function) is provided between RNC (Radio Network Controller)/HNB and SGSN (Serving GPRS (General Packet Radio System) Support Node), with a subset of Gi being the interface between the TOF and the Internet. In offloading, TOF drags uplink traffic out from the GTP-U (GPRS Tunneling Protocol for User plane) tunnel and performs NAT (Network Address Translation) by means of, for example, a NAT gateway to offload the traffic. Here, in NAT, address translation from a private IP address to a global IP address is performed at a router or the like. Alternatively, an IP address and a TCP/UDP port number are translated in a set. Moreover, TOF performs reverse NAT on downlink offload traffic and inserts it back to the GTP-U tunnel. As described above, according to SIPTO Solution 4, offload is determined by packet inspection and NAT, on the basis of user, APN, service type, IP address and the like.

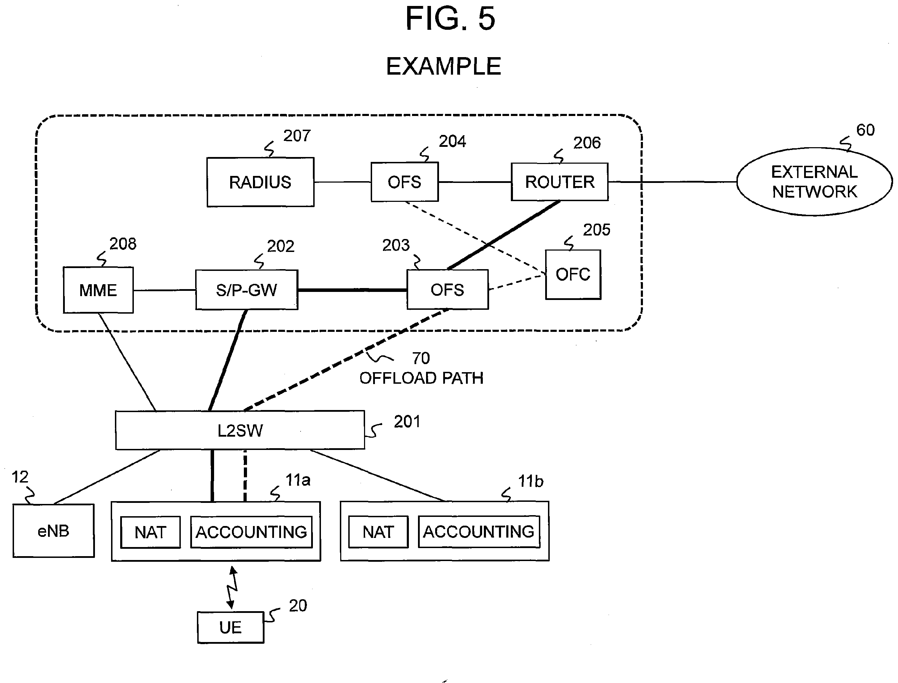

Moreover, in SIPTO Solution 5 (see NPL1, 5.6), for SIPTO to be applied for macrocell or HNB, architectures are disclosed which are applicable to UMTS or LTE, or both of them, and in which connection to the Internet or the like is made via L-PGW/L-GGSN that is connected to a serving gateway S-GW/RNC (see NPL 1, Figures 5.6.3.2, 5.6.3.3 and 5.6.3.4).

Moreover, there are some cases where traffic is offloaded onto another network. For example, a mobile terminal such as a smartphone or tablet terminal with Wi-Fi (Wireless Fidelity) connection functionality is caused to connect to the Internet from a wireless LAN (wireless Local Area Network) or the like via a Wi-Fi access point (this is also referred to as Wi-Fi offload). Note that some wireless LANs are configured to connect to a PDN via P-GW (PDN gateway) or GGSN (see NPL 2, 4.2).

### [Citation List]

### [Non-patent Literature]

[NPL 1] 3GPP TR23.829 v10.0.1 (2011-10)
[NPL 2] 3GPP TS23.402 v11.4.0 (2012-09)
[NPL 3] The paper entitled "Traffic Offload Enhancements for eUTRAN" by Konstantinos Samdanis *et al.* introduces the main concepts behind LIPA/SIPTO and discusses the main requirements to support them. Different architecture solutions, proposed for home, enterprise and macro-cellular networks, are presented. The paper also elaborates on LIPA/SIPTO traffic handling. A DNS-based approach, offering operators a fine-grained control of LIPA/SIPTO traffic handling, is introduced. The paper then discusses different other issues pertaining to LIPA/SIPTO traffic management, SIPTO QoS support, data offload gateway selection, and service planning and deployment. Finally, the paper concentrates on recent efforts towards the support of LIPA/SIPTO service continuity.
[NPL 4] TD S2-097216, Report of 3GPP TSG SA WG2 meeting #76, San Jose del Cabo, Mexico, 16-20 November 2009.
[NPL 5] TD S2-100233, Report of 3GPP TSG SA WG2 meeting #77, Shenzhen, China, 18-22 January 2010.
[NPL 6] S2-084168, Report of 3GPP TSG-SA2 meeting #65, Prague, Czech Republic, 12-16 May 2008.

### [Summary of Invention]

### [Technical Problem]

However, the above-described systems according to NPLs have the problem that the introduction of an offload function is not easy because it is necessary to prepare a base station supporting a Wi-Fi offload function or a traffic offload function such as LIPA or SIPTO.

Moreover, according to Wi-Fi offload or the like, mobility cannot be achieved if a mobile terminal goes out of the location where a Wi-Fi access point is installed because it cannot make communication connection, and further there are problems with respect to connectivity, security and the like while a mobile terminal is moving. With TOF according to SIPTO Solution 4 and the like, mobility cannot be achieved either. Furthermore, the above-described traffic offload functions according to NPLs also have the problem that scalability with an increase in the number of advanced terminals such as so-called smartphones cannot be achieved.

Accordingly, the present invention provides a communication system, a communication apparatus and a communication control method as set out in the appended claims.

The embodiments of the following description which are not covered by the appended claims are considered as not being part of the present invention.

A communication system according to the present invention is a communication system including: a communication apparatus wirelessly connecting to terminals; and a network. The communication system is characterized by including: an address translation table that is configured to offload a traffic from a terminal to the network, wherein the address translation table includes source ports associated respectively with the terminals; and a source translation means for translating a source port in the address translation table for each radio bearer by allocating predetermined source port ranges to different radio bearers, wherein the radio bearer is set up between the terminal that is a source of the traffic and the communication apparatus.

A communication apparatus according to the present invention is a communication apparatus in a communication system including a network. The communication apparatus is characterized by including: a communication means that is configured to wirelessly connect to terminals; an address translation table for offloading a traffic from a terminal to the network, wherein the address translation table includes source ports associated respectively with the terminals; and a source translation means for translating a source port in the address translation table for each radio bearer by allocating predetermined source port ranges to different radio bearers, wherein the radio bearer is set up between the terminal that is a source of the traffic and the communication apparatus.

A communication control method according to the present invention is a communication control method in a communication system including: wirelessly connecting to terminals; and a network. The method is characterized by including: translating a source port in an address translation table for each radio bearer by allocating predetermined source port ranges to different radio bearers, wherein the radio bearer is set up between the terminal that is a source of the traffic and the communication apparatus, wherein the address translation table includes source ports associated respectively with the terminals; and when the traffic is offload-target traffic, offloading the traffic to the network by using the address translation table.

### [Advantageous Effects of Invention]

According to the present invention, a source port in an address translation table is translated per radio bearer set up with a traffic source terminal, whereby it is possible to easily introduce a traffic offload function into a communication system.

### [Brief Description of Drawings]

FIG. 1 is a block diagram showing the schematic architecture of a communication system according to a first exemplary embodiment of the present invention.
FIG. 2 is a schematic diagram for describing the operation of a communication apparatus according to the present exemplary embodiment.
FIG. 3 is a block diagram showing the schematic architecture of a communication system according to a second exemplary embodiment of the present invention.
FIG. 4 is a block diagram showing the schematic architecture of a communication system according to a third exemplary embodiment of the present invention.
FIG. 5 is a network diagram showing the architecture of a communication system according to an example of the present invention.
FIG. 6 is a sequence diagram showing a terminal attach procedure in the communication system shown in FIG. 5.
FIG. 7 is a sequence diagram showing a procedure for a terminal to start communication in the communication system shown in FIG. 5.
FIG. 8 is a sequence diagram showing a procedure for handover of a terminal from an eNB to a base station according to the present example in the communication system shown in FIG. 5.
FIG. 9 is a sequence diagram showing a procedure for handover of a terminal between the base stations according the present example in the communication system shown in FIG. 5.
FIG. 10 is a sequence diagram showing a procedure for handover of a terminal from the base station according to the present example to an eNB in the communication system shown in FIG. 5.
FIG. 11 is a sequence diagram showing a procedure for handover of a terminal from the base station according to the present example to UTRAN in the communication system shown in FIG. 5.
FIG. 12 is a sequence diagram showing a procedure for terminating communication in the communication system shown in FIG. 5.

### [Description of Embodiments]

### <Outline of exemplary embodiment>

According to an exemplary embodiment of the present invention, a communication apparatus wirelessly connecting to terminals is provided with an address translation table for performing traffic offload and a source port translation function that allocates source port ranges to different radio bearers in the address translation table. Thereby, when an offload function is introduced, it is only necessary to add a change to an offload-target range without affecting non-offload-target ranges in a network, and accordingly the introduction of an offload function is facilitated. Hereinafter, exemplary embodiments and examples of the present invention will be described in detail with reference to drawings.

### 1. First exemplary embodiment

### 1.1) Architecture

In a communication system according to a first exemplary embodiment of the present invention, a case is illustrated where a traffic offload function and a source port translation function are provided to a base station as a communication apparatus. However, a function of determining whether or not traffic offload should be performed may be implemented on another node.

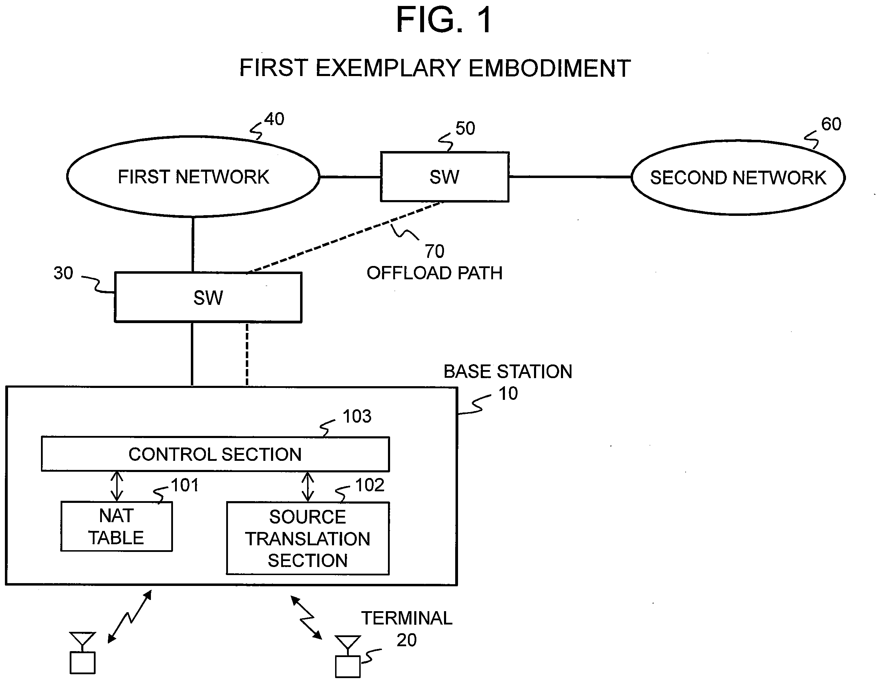

Referring to FIG. 1, the communication system according to the first exemplary embodiment of the present invention includes a base station 10, a switch 30, a first network 40 and a switch 50, and a path that runs through the first network 40 and an offload path 70 that does not run through the first network 40 can be configured between the base station 10 and a second network 60. Hereinafter, it is assumed that a plurality of terminals 20 are accommodated under the base station 10. Note that the first network 40 and the second network 60 may be a core network (CN) and a packet data network (PDN), respectively.

The base station 10 has an address translation function and a source port translation function in addition to a communication function as a base station and includes at least a NAT (Network Address Translation) table 101, a source translation section 102 and a control section 103 for controlling the NAT table 101 and source translation section 102. In the NAT table 101, a path for a packet subjected to address translation may be statically set beforehand, or may be dynamically set at the time of offload. The control section 103 determines the necessity/unnecessity of traffic offload. The control section 103 enables the address translation function by means of the NAT table 101 when offload is performed, and disables the address translation function when offload is not performed. That is, it is possible to control whether or not to perform offload, depending on whether or not to perform address translation by using the NAT table 101. In this manner, the base station 10 can use the NAT table 101 to forward a packet through the offload path 70, which does not run through the first network 40 between a terminal 20 wirelessly connected to the base station 10 and the second network 60. When offload is not required, the base station 10 forwards a packet via the first network 40 between the terminal 20 and the second network 60. Note that the source translation section 102 will be described later.

### 1.2) Allocation of source port range

According to the present exemplary embodiment, the source translation section 102 of the base station 10 sets a predetermined allocation port range (e.g., predetermined 5000s, 6000s, etc.) per radio bearer and records them in the NAT table 101.

A radio bearer RB (Radio Bearer) is a connection established over a wireless segment between the terminal 20 and the base station 10 and is determined by a combination of three types of elements, namely, a terminal, an access point name (APN) and a QCI (QoS (Quality of Service) Class Indicator). Accordingly, if at least one of the terminal, APN and QCI is different, a different radio bearer is formed, and a different port range is allocated.

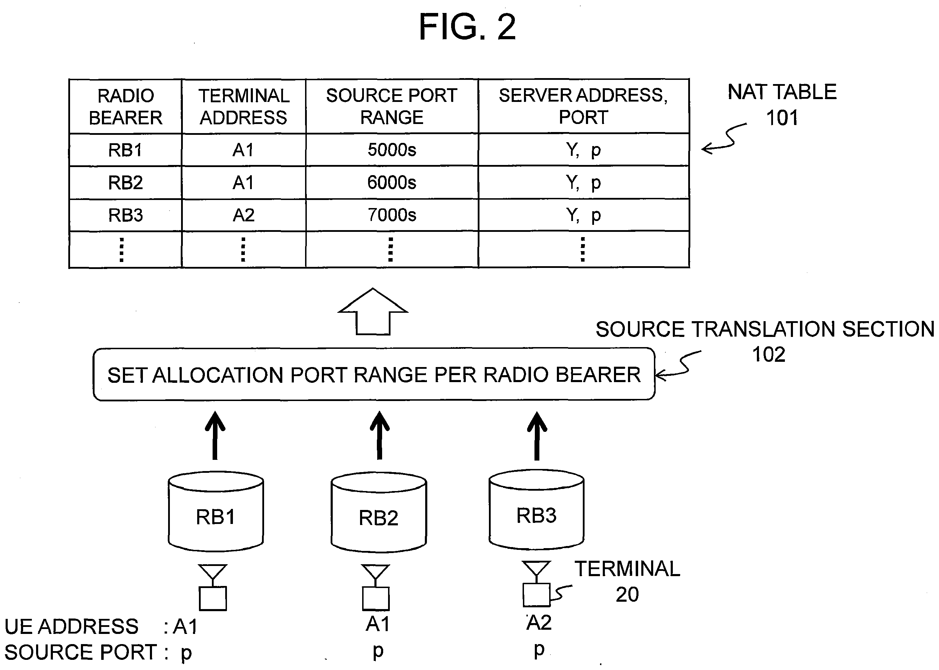

As illustrated in FIG. 2, different port ranges, for example, the 5000s range (5000-5999), the 6000s range (6000-6999) and the 7000s range (7000-7999) are allocated to different radio bearers RB1, RB2 and RB3, respectively. A source port determined is associated with a terminal address and stored in the NAT table 101 per port range as described above.

For example, the control section 103 assigns a source port number in the 5000s range (5000-5999) to a packet received from a terminal through the radio bearer RB1, records it in the NAT table 101, and forwards the packet to a server. Reversely, if a packet received from the server is one in the 5000s range, it is determined that RB1 is the forwarding-destination radio bearer, and the packet is forwarded to the corresponding terminal. As an example, if the QCI value of the radio bearer RB1 is set as an offload target, a packet to be sent and received between the terminal and the server through the radio bearer RB1 is forwarded through the offload path 70.

Note that functions equivalent to the source translation section 102 and control section 103 can also be implemented by executing programs stored in a storage means (not shown) on a computer such as a CPU (Central Processing Unit).

### 1.3) Effects

As described above, according to the first exemplary embodiment of the present invention, address translation is performed on an offload-target packet by using the NAT function at the time of traffic offload, whereby the offload-target packet can be transferred with bypassing the first network 40. That is, it is possible to control offload by choosing whether or not to use the NAT function. Moreover, the base station 10 allocates predetermined source port ranges to different radio bearers and sets them in the NAT table, whereby an offload function can be introduced without affecting the other part of the network. Accordingly, the introduction of an offload function is facilitated.

### 2. Second exemplary embodiment

In a communication system according to a second exemplary embodiment of the present invention, a packet counter function per radio bearer is provided in addition to the offload control function and source port translation function. Packets are counted for each radio bearer, whereby it is possible to perform accounting management for the user of a terminal with which a radio bearer has been set up.

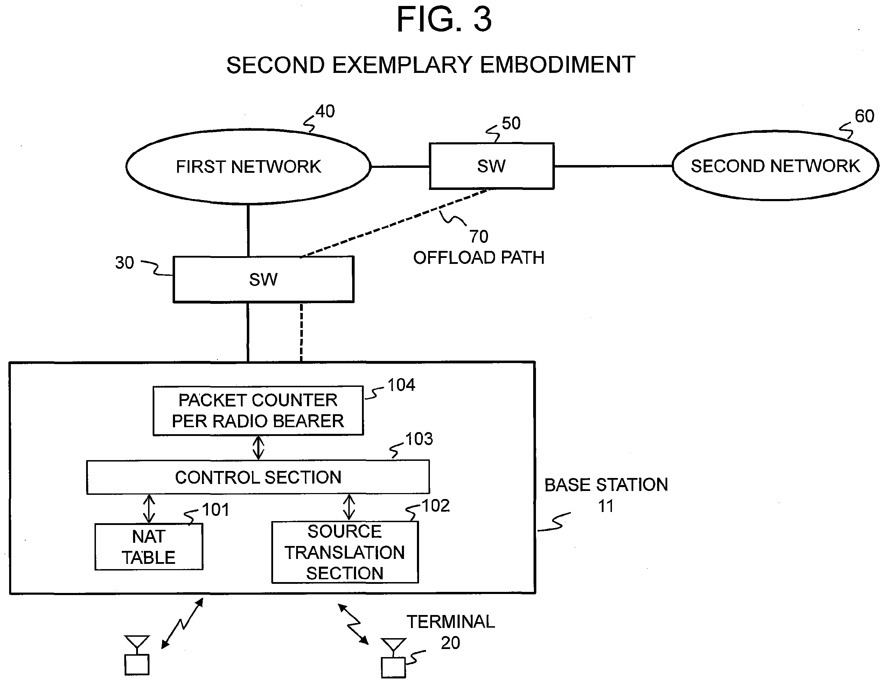

Referring to FIG. 3, the architecture of the communication system according to the second exemplary embodiment of the present invention is approximately the same as that of the first exemplary embodiment, with the difference that a packet counter 104 for counting the number of forwarded packets for each radio bearer is newly provided to a base station 11. The other part of the architecture and functions are similar to those of the first exemplary embodiment, and therefore a description thereof will be omitted.

The base station 11 according to the present exemplary embodiment, in addition to a communication function as a base station, includes a NAT table 101, a source translation section 102, an offload control section 103 and a packet counter 104 as described above. The packet counter 104, for each radio bearer, counts the number of offload-target packets forwarded, in accordance with the control of the offload control section 103. The packet count value for each radio bearer is sent to an accounting server or the like (not shown) as information necessary to charge a relevant user.

Note that functions equivalent to the source translation section 102, control section 103 and packet counter 104 can also be implemented by executing programs stored in a storage means (not shown) on a computer such as a CPU (Central Processing Unit).

### 3. Third exemplary embodiment

In a communication system according to a third exemplary embodiment of the present invention, control for switching to an offload path is performed by applying OpenFlow technology.

### 3.1) Architecture

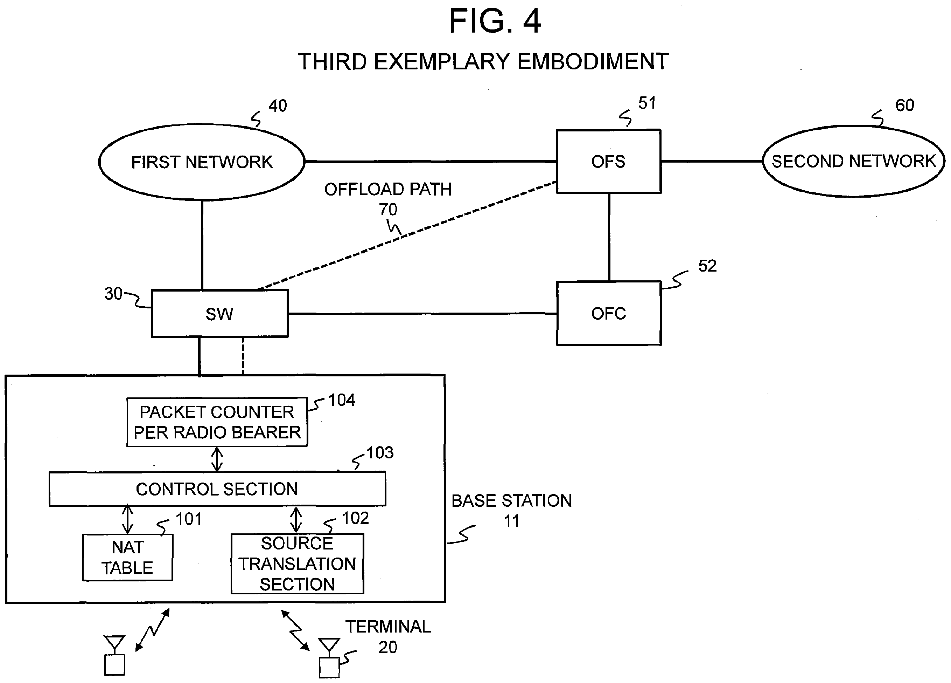

Referring to FIG. 4, the architecture of the communication system according to the third exemplary embodiment of the present invention is basically similar to that of the first exemplary embodiment, but a switch 50 is composed of an OpenFlow Switch (OFS) 51 and an OpenFlow Controller (OFC) 52. For example, the OFC 52 can set a flow at the time of offload in a flow table of the OFS 51 and can set, as a default value, a path running through the first network 40 at the time of non-offload. OpenFlow will be described later. In the present exemplary embodiment, the base station 11 according to the second exemplary embodiment is illustrated, but a base station may be the base station 10 according to the first exemplary embodiment. Note that the first network 40 and the second network 60 are assumed to be a core network and a PDN (Packet Data Network), respectively, and the OFS 51 is deployed at SGi (or Gi in the 2nd/3rd generation), which is a reference point (RP) between a PGW (PDN Gateway) in the core network 40 and the PDN 60.

When traffic is offloaded, uplink data traffic from a terminal 20 is sent to the base station 11 through a radio bearer and then forwarded to the PDN 60 through the offload path 70, which runs through the base station 11, switch 30 and OFS 51. Downlink traffic from the PDN 60 is forwarded to the base station 11 from the OFS 51 through the offload path 70. The base station 11 identifies a radio bearer corresponding to a relevant port range, based on destination port information in the received packet, and then the downlink traffic is wirelessly sent to a destination terminal 20 through this radio bearer.

When traffic is not offloaded, uplink data traffic from a terminal 20 is sent to the base station 11 through a radio bearer and then forwarded to the PDN 60 via the base station 11, switch 30, core network 40 and OFS 51. Downlink traffic from the PDN 60 is forwarded to the base station 11 from the OFS 51 via the core network 40 and switch 30 and wirelessly sent to a terminal 20 from the base station 11 through a radio bearer.

The base station 11 determines the necessity/unnecessity of traffic offload and, when performing offload, uses the address translation function by means of the NAT table 101 to forward an offload-target packet through the offload path 70, as described above. Moreover, the base station 11 sets predetermined allocation port ranges for respective radio bearers and records them in the NAT table 101, and also counts packets for each radio bearer.

### 3.2) OpenFlow

Hereinafter, OpenFlow will be described briefly to the extent relevant to the present exemplary embodiment. OpenFlow is a network control technology proposed by the OpenFlow Switch Consortium and implements path control in units of flows, with a series of communication, which is determined based on a combination of identifiers such as physical port number (L1), MAC (Media Access Control) address (L2), IP address (L3) and port number (L4), defined as a "flow". OpenFlow Switch (OFS), which functions as a forwarding node, operates in accordance with a flow table, and an entry is added or a modification is made to the flow table at an instruction from OpenFlow Controller (OFC). The flow table includes, for each flow, rules, statistical information and actions that define processing to be applied to a packet matching a rule. A rule is a filtering condition to be matched against header information of a packet. The statistical information includes flow statistical information such as the number of packets, the number of bytes, and a duration the flow has been active, which can be designated as a counter. The actions include flow processing, packet forwarding (Forward), packet dropping (Drop), modifying of a specific field of a packet (Modify-Field), and the like.

For packet forwarding (Forward), for example, forwarding to a specific port of a switch, forwarding to all ports of a switch, forwarding to the OFC, or the like is selected.

When the OFS receives a packet, the OFS searches the flow table in the OFS and matches header information of the packet against the rules. Any combination of Layer 1 (L1) to Layer 4 (L4) can be used for header fields to be matched. An example thereof is shown below:
L1: Ingress Port (switch's physical port number);
L2: Ether src (source MAC address), Ether dst (destination MAC address), Ether type,
VLAN (Virtual Local Area Network)-id, VLAN priority;
L3: IP src (source IP address), IP dst (Destination IP address), IP protocol type, TOS (Type Of Service) value; and
L4: TCP (Transmission Control Protocol)/UDP (User Datagram Protocol) src port (source L4 port number), TCP/UDP dst port (destination L4 port number).

When header information of the received packet matches a rule (condition) as a result of searching the flow table, processing defined in the action corresponding to the rule is performed on the packet. When no rule matching header information of the received packet is found, the OFS forwards the received packet to the OFC through a secure channel. The OFC performs path calculation based on the source and destination information on this received packet to determine a forwarding path and configures the flow tables of all OFSs along the forwarding path such that the determined forwarding path will be implemented. The OFC having set up a flow entry forwards the received packet to, for example, an OFS that is the egress of the flow to send the packet toward the destination. Thereafter, header information of a packet belonging to the same flow as this received packet will match the rule in the flow tables of the OFSs on which the flow entry has been set up. Accordingly, those packets belonging to the same flow will be sequentially forwarded to each OFS along the determined forwarding path in accordance with the configured flow table (rules and actions) and sent to the destination terminal. In many cases, a packet that does not make any match in the flow table of an OFS is the first forwarded packet of a flow. Such a packet is also collectively referred to as "a first packet".

### 4. Example

Hereinafter, an example of the communication system according to the above-described third exemplary embodiment will be described in detail. Here, a case will be illustrated where a plurality of the base stations 11 (hereinafter, represented by 11a and 11b) and a general base station (represented by eNB 12) are connected.

### 4.1) Architecture

Referring to FIG. 5, in the communication system according to an example of the present invention, the base stations 11a and 11b and eNB 12 are connected to a Layer 2 switch (L2SW) 201. Here, the base stations 11a and 11b are the above-described base stations according to the second exemplary embodiment, and the eNB 12 is a base station with no offload function as mentioned above. A terminal (UE) 20 can set up a radio bearer and wirelessly communicate with a base station of the service area.

The L2SW 201 connects to an S/P-GW 202, an OFS 203 and an MME (Mobility Management Entity) 208, and a non-offload path running through the S/P-GW 202 (i.e., via a core network) and an offload path 70 providing direct connection can be set up between the base station 11a and the OFS 203, as described above. The OFS 203 and an OFS 204 are controlled by an OFC 205. The OFSs 203 and 204 are connected to a router 206, which controls relaying at Layer 3, and the router 206 is connected to an external network 60.

In relaying, the router 206 terminates a MAC address, so that a MAC frame sent out from a port of this router 206 becomes the MAC address of this port. Moreover, the OFS 204 is connected to a RADIUS (Remote Authentication Dial In User Service) server 207. The RADIUS server 207 functions as an AAA serer, which controls authentication, authorization and accounting.

Note that FIG. 5 illustrates a configuration (S/P-GW) that accommodates S-GW (Serving Gateway) and P-GW (PDN Gateway) in a unit for simplicity, but they may be deployed separately. Moreover, an HSS (Home Subscriber Server), a PCRF (Policy and Charging Rules Function) and the like are omitted from the diagram.

The OFS 204 and OFC 205 are provided for capturing authentication information exchanged between the RADIUS server 207 and the P-GW and also for accounting management. Moreover, FIG. 5 depicts that the OFS 203 is connected to the single P-GW of the S/P-GW 202 for simplicity, but a plurality of P-GWs may be connected to the OFS 203, which functions as a Layer 2 switch. For example, a redundant configuration including a plurality of P-GWs may be made, or a scalable configuration may be made that enables the system to flexibly expand/contract with an increase or a decrease in subscribers or with an increase or a decreased in load. The use of an OFS makes it easy to enhance the scalability of the network.

The OFC 205 sets a flow entry in a flow table of the OFS 203 so that communication can be performed over the offload path 70, prior to the start of packet offload. For example, the OFC 205 may dynamically set the offload path 70 in accordance with a notification from the base station 11a, or may statically set the offload path 70 beforehand even without a notification from the base station 11a. Accordingly, at the time of offload, the OFS 203 receives an uplink packet from the base station 11a through the offload path 70 and forwards it to the router 206. The router 206 sends the uplink packet to the external network, PDN 60. Reversely, the OFS 203 forwards a downlink packet received from the router 206 to the base station 11a through the offload path 70. Moreover, at the time of non-offload, the OFS 203 sends/receives uplink/downlink packets to/from the base station 11a via the S/P-GW 202.

As described above, according to the present example, the OFS 204 and OFC 205 are deployed between the RADIUS server 207 and the S/P-GW 202, whereby it is possible to acquire authentication information exchanged between the RADIUS server 207 and the P-GW. Also, in coordination with the packet counter function of the base station 11a, it is possible to easily perform accounting management for each bearer. Note that the Layer 2 switch (L2SW) 201 may also be configured by using an OFC and an OFS.

The S-GW of the S/P-GW 202 functions as a mobility anchor for the user plane during handover, or an anchor for mobility between LTE and another 3GPP technology. The S-GW manages and stores UE contexts (IP bearer service parameters, network internal routing information, etc.)

The P-GW of the S/P-GW 202 implements UE's connection to the external PDN 60. The P-GW performs IP address allocation (delivery), policy application and packet filtering (e.g., deep packet inspection and packet screening) for an attached UE in order to map traffic to an adequate QoS level. The P-GW is connected to the S-GW through S5 interface when the S-GW is located in the same PLMN (Public Land Mobile Network), or through S8 interface when the S-GW is located in an external (service area) PLMN.

The MME 208 functions as a UE mobility management node in an LTE access network. For example, it performs tracking of UE in an idle mode, paging, bearer activation/deactivation, selection of S-GW and P-GW at initial attachment, management of tunnel establishment between S-GW and P-GW, selection of S-GW for UE at the time of intra-LTE handover, user authentication in coordination with HSS, and the like. The MME 208 is connected to a base station (eNB) through S1-MME interface to which the S1-AP (application) protocol for message exchange is applied. Further, the MME 208 is connected to the S-GW through S11 interface.

Moreover, the PCRF (Policy and Charging Rules Function) (not shown) controls policy and charging rules and, in the present example, is connected to the P-GW through S7 interface via the OFS 203.

### 4.2) Operations

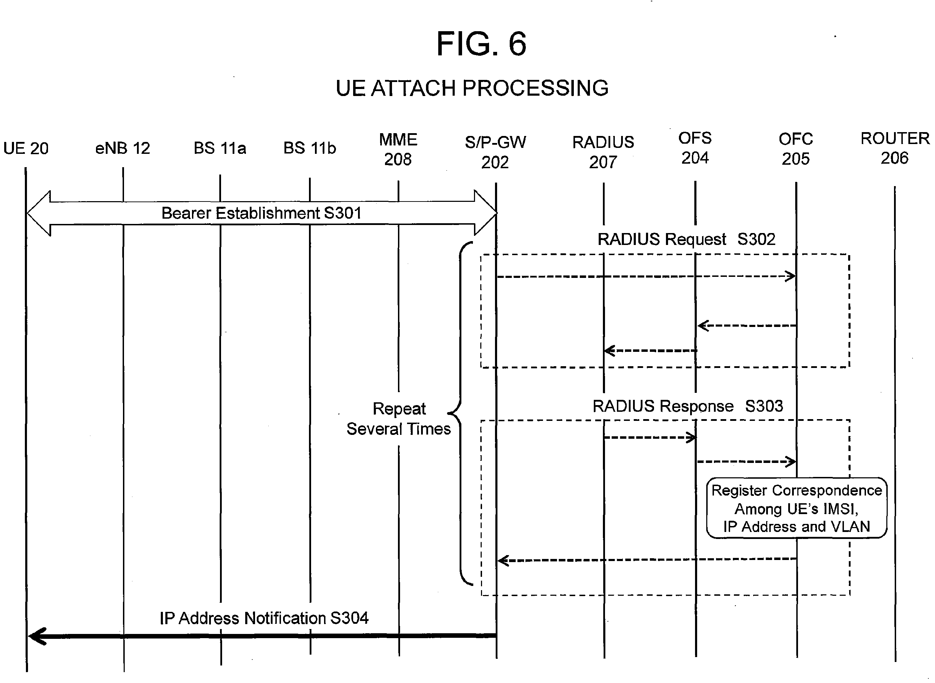

Hereinafter, operations in the communication system according to the present example will be described in detail with reference to FIGS. 6 to 12.

### <Attach processing of UE to NW>

Referring to FIG. 6, first, the UE 20 sends a bearer establishment request (Attach Request) via the base station 11a, whereby a bearer is established between the UE 20 and the S/P-GW 202 (Operation S301). Specifically, the MME 208 having received the attach request message from the UE 20 performs user authentication based on authentication information acquired from the HSS with which subscriber information is registered. Subsequently, the MME 208 selects an S-GW and a P-GW based on APN (Access Point Name) notified from the UE 20 and sends a bearer setup request to the selected S-GW and P-GW. In response to the bearer setup request, the P-GW delivers an IP address and sets up the bearer between the S-GW and the P-GW. Upon this setup, the S-GW returns a bearer setup response to the MME 208. The MME 208 sends a context setup request to the base station 11a, and the radio bearer is set up between the UE 20 and the base station 11a. The UE 20 sends an attach completion response to the MME 208. The base station 11a returns a context setup response to the MME 208. The MME 208 sends a bearer update request to the S-GW based on the context setup response, and the S-GW returns a bearer update response to the MME 208.

Subsequently, a RADIUS client (e.g., P-GW) at the S/P-GW 202 makes a RADIUS request to the RADIUS server 207 (Operation S302). In this case, the RADIUS request packet (UDP) is sent to the RADIUS server 207 via the OFS 204. However, since header information of the RADIUS request packet does not match the rules in the flow table of the OFS 204, the packet is forwarded to the OFC 205 once as a first packet and thereafter forwarded to the RADIUS server 207 via the OFS 204. Alternatively, RADIUS protocol packets may be configured to be transported to the RADIUS server 207 via the OFC 205. The RADIUS request packet includes, for example, user name, encryption password, client's IP address and port ID.

The RADIUS server 207, when receiving an authentication request, searches a user database to perform user authentication and returns a response packet including required setting information and the like to the P-GW (Operation S303). In this case, the OFC 205 receives the response packet to the P-GW from the RADIUS server 207 via the OFS 204, performs packet inspection on this response packet, and records a correspondence among IMSI (International Mobile Subscriber Identity), which is the terminal ID, IP address and VLAN (Virtual Local Area Network) tag. The response packet is forwarded to the P-GW from the OFC 205 via the OFS 203. Then, the P-GW of the S/P-GW 202 delivers an IP address and notifies it to the UE 20 (Operation S304).

### <Start of offload communication>

First, it is assumed that an offload-target QCI (QOS Class Indicator) or QCIs are preset in the base station 11a. QCIs of VoLTE (Voice Over LTE) (IR.92 specifications) are listed as an example.
- Voice bearer (GBR: Guaranteed Bit Rate): QCI = 1
- Video bearer (GBR): QCI = 2
- Video bearer (non-GBR): QCI = 7
- Default bearer for SIP (Session Initiation Protocol) signal: QCI = 5
- Internet Connectivity: QCI = 8 or 9
Based on QCI, it is predetermined whether or not a bearer is an offload target. For example, the radio bearers of QCI = 8 and 9 can be set as offload targets in the base station 11a.

Further, in the base station 11a, an allocation port range is preset for each radio bearer RB with UE, and a NAT table 101 as illustrated in FIG. 2 is set, as described above.

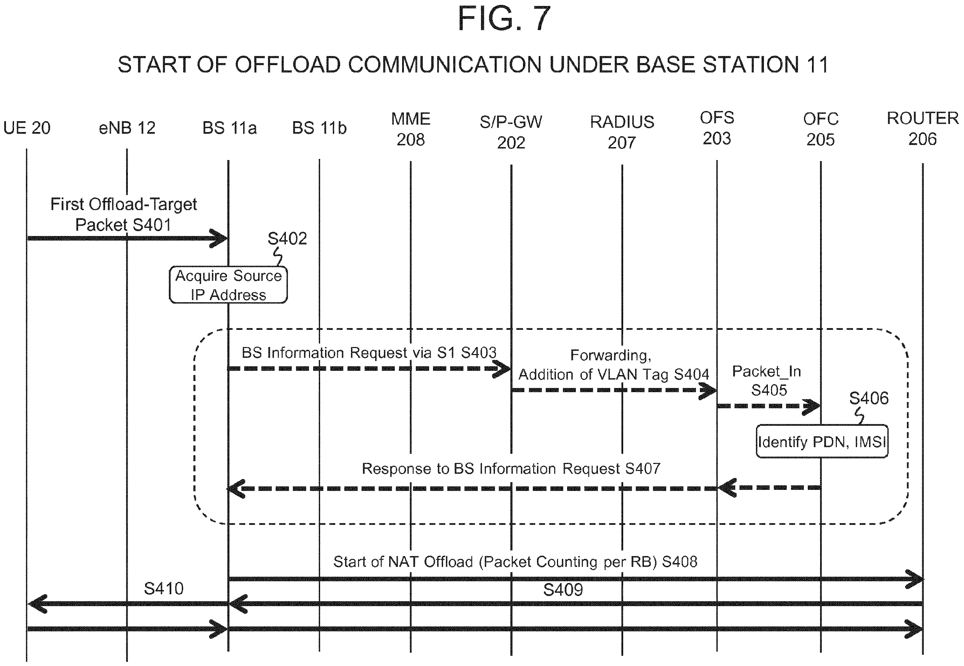

Referring to FIG. 7, when the UE 20 starts communication under the base station 11a, the UE 20 sends a packet to the base station 11a (Operation S401). When a first IP packet is received from a radio bearer of an offload-target QCI, the base station 11a acquires a source IP address (Operation S402). The first IP packet is, for example, a DNS Query packet, which is a query to a DNS (Domain Name Service) server, a TCP SYN packet, which is transferred from a client to a server when a TCP connection is established, or the like.

The base station 11a sends a base station information request addressed to the S/P-GW 202 via S1 interface (Operation S403). The base station information request includes source UE, destination OFC, base station address (MAC address), TMSI (Temporary Mobile Subscriber Identity) and UE IP address. The S/P-GW 202 adds a VLAN tag to the base station information request and then forwards it to the OFS 203 (Operation S404). The OFS 203 forwards the base station information request as a "Packet_In" to the OFC 205 by using a secure channel (Operation S405). The OFC 205 processes the base station information request, identifies a PDN and IMSI based on the UE IP address and VLAN tag (Operation S406), and returns ACK (a response to the base station information request) including the UE IP address, VLAN tag and TMSI to the base station 11a via the OFS 203 (Operation S407). The above-described Operations S403 to S407 can be performed asynchronously to offload processing. Accordingly, the base station 11a can retain the first IP packet until a response to the base station information request is returned, or can asynchronously perform data communication only.

The base station 11a starts traffic offload in accordance with the NAT table 101, with respect to offload-target packets received (Operation S408). That is, uplink packets from the UE 20 are sent to the PDN 60 via the base station 11a, offload path 70, OFS 203 and router 206. In this event, it is also possible to count the number of packets for each radio bearer by using a packet counter 104 of the base station 11a.

Downlink packets received from the PDN 60 via the router 206 are forwarded to the base station 11a via the OFS 203 and offload path 70 (Operation S409). The base station 11a, based on a port number in a downlink packet, identifies a radio bearer to which the packet should be forwarded and then sends the packet to a relevant destination UE 20 (Operation S410). The NAT table 101 is retained at least until a radio bearer is set up and released, which will be described later. The release of the NAT table 101 is controlled by using a timer in many cases, but the present example is not limited to this.

### <Handover from eNB to base station 11>

Hereinafter, a description will be given of a sequence of operations when the UE 20 is handed over from the eNB 12 to the base station 11a. In the present example, it is assumed that seamless connection is not performed but a new session is set up when this handover is performed. Moreover, it is assumed that in the base station 11a, an allocation port range is preset for each radio bearer RB with UE and a NAT table 101 as illustrated in FIG. 2 is set, as described above.

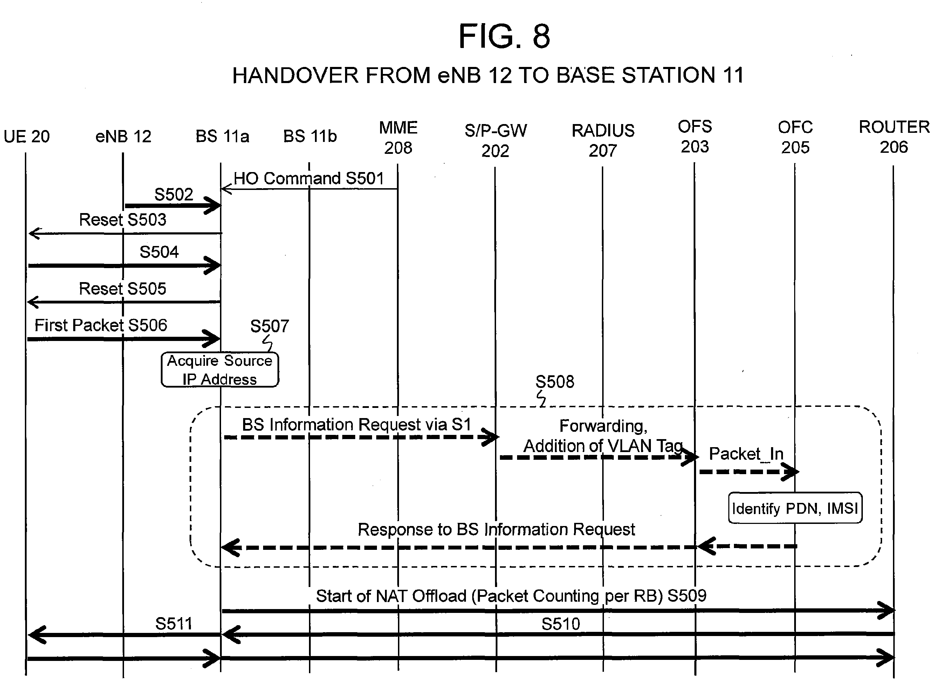

Referring to FIG. 8, it is assumed that the base station 11a has received a handover command from the MME 208 (Operation S501) and thereafter has received a data packet (TCP Data/Ack) from the eNB 12 via X2 interface (Operation S502). In this case, since a correspondence port is not registered in the NAT table 101 of the base station 11a, the base station 11a sends a TCP RST packet to the UE 20 to forcefully disconnect (Operation S503). Subsequently, when a data packet (TCP Data/Ack) is received from the UE 20 (Operation S504), a correspondence port is not registered in the NAT table 101 of the base station 11a in this case either, and accordingly the base station 11a sends a TCP RST packet to the UE 20 to forcefully disconnect (Operation S505).

Thereafter, when a first IP packet (e.g., a DNS Query packet, a TCP SYN packet or the like) is received from the UE 20 through an offload-target radio bearer (Operation S506), the base station 11a acquires a source IP address (Operation S507). In this acquisition of the source IP address, it is also possible to use the information sent to the UE and the information received from the UE in the above-described Operations S503 to S505. Thereafter, Operation S508 similar to Operations S403 to S407 shown in FIG. 7 is performed, and subsequently Operations S509 to S511 similar to Operations S408 to S410 shown in FIG. 7 are performed.

### <Handover from base station 11a to base station 11b>

Hereinafter, a description will be given of a sequence of operations when the UE 20 is handed over from the base station 11a to the base station 11b. It is assumed that in the base station 11b, an allocation port range is preset for each radio bearer RB with UE and a NAT table 101 as illustrated in FIG. 2 is set, as described above.

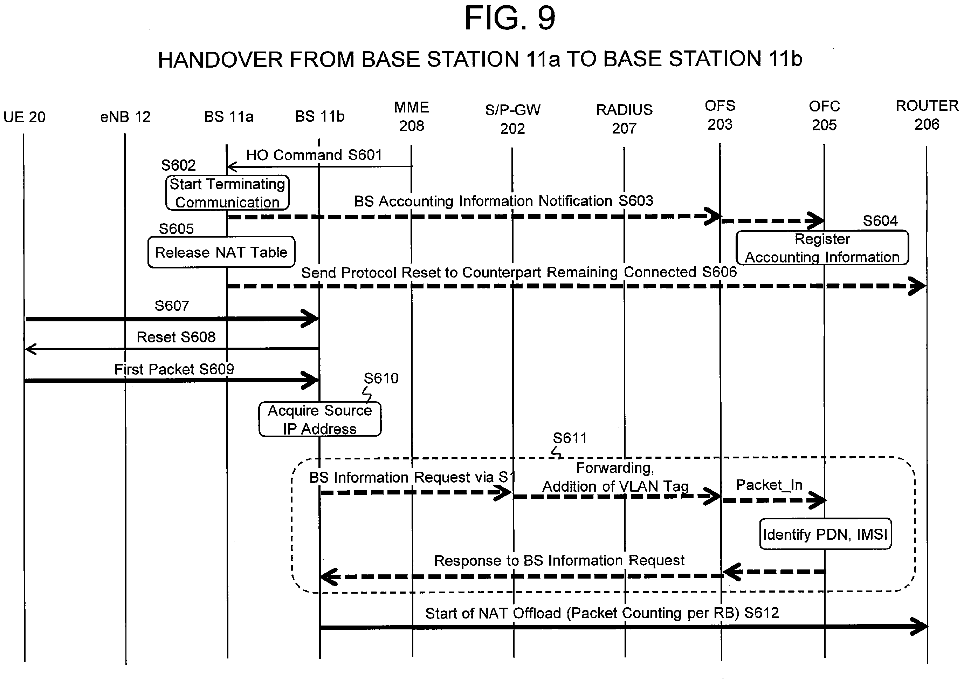

Referring to FIG. 9, when the base station 11a receives a handover command from the MME 208 (Operation S601), the base station 11a starts communication termination processing at the time of handover to the base station 11b (Operation S602). That is, the base station 11a sends a base station accounting information notification including UE information to the OFC 205 (Operation S603), and the OFC 205 processes the base station accounting information notification and registers accounting information (Operation S604). Further, the base station 11a releases the NAT table (Operation S605) and sends a TCP RST packet to the communication counterpart remaining connected to forcefully disconnect therefrom (Operation S606). Note that the base station 11a does not send offload-target data packets (TCP Data/Ack) to the base station 11b via X2 interface.

When the base station 11b receives a data packet (TCP Data/Ack) from the UE 20 (Operation S607), the base station 11b sends a TCP RST packet to the UE 20 to forcefully disconnect because a correspondence port is not registered in the NAT table 101 (Operation S608).

Thereafter, when a first IP packet (e.g., a DNS Query packet, a TCP SYN packet or the like) is received from the UE 20 through an offload-target radio bearer (Operation S609), the base station 11b acquires a source IP address (Operation S610). In this acquisition of the source IP address, it is also possible to use the information sent to the UE in the above-described Operation S608. Thereafter, the base station 11b performs Operation S611 similar to Operations S403 to S407 shown in FIG. 7, and subsequently performs Operation S612 similar to Operation S408 shown in FIG. 7 and operations similar to the subsequent Operations S409 to S410.

### <Handover from base station 11a to eNB 12>

Hereinafter, a description will be given of a sequence of operations when the UE 20 is handed over from the base station 11a to the eNB 12. It is assumed that in the base station 11a, an allocation port range is preset for each radio bearer RB with UE and a NAT table 101 as illustrated in FIG. 2 is set, as described above.

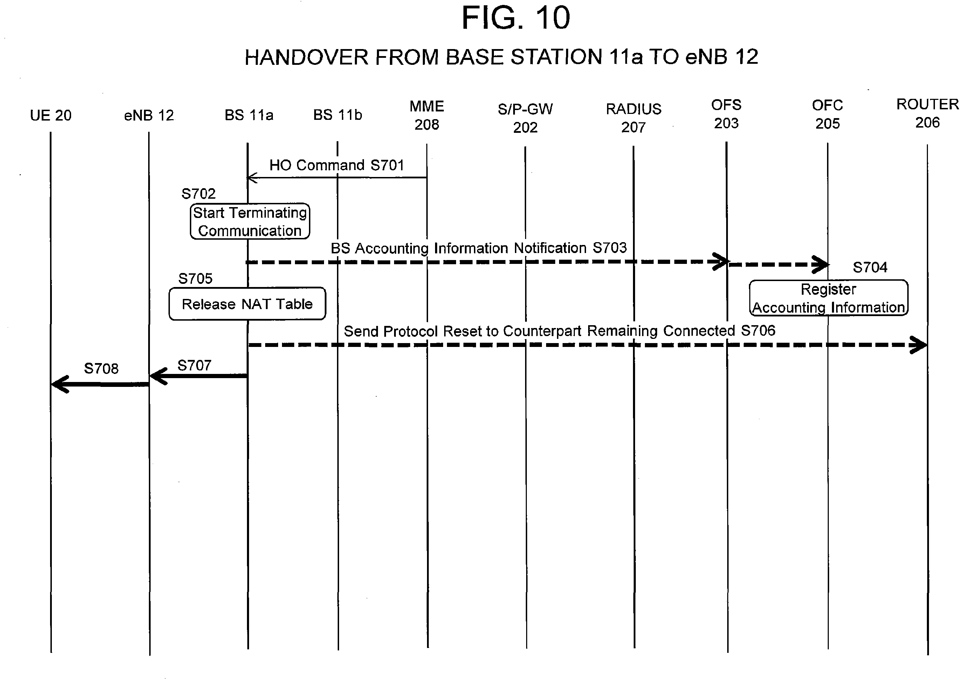

Referring to FIG. 10, when the base station 11a receives a handover command from the MME 208 (Operation S701), the base station 11a starts communication termination processing at the time of handover to the eNB 12 (Operation S702). That is, the base station 11a sends a base station accounting information notification including UE information to the OFC 205 (Operation S703), and the OFC 205 processes the base station accounting information notification and registers accounting information (Operation S704). Further, the base station 11a releases the NAT table (Operation S705) and sends a TCP RST packet to the communication counterpart remaining connected to forcefully disconnect therefrom (Operation S706). Subsequently, the base station 11a sends packets (of VoLTE and the like) belonging to non-offload-target communication to the eNB 12 via X2 interface (Operation S707), and the eNB 12 forwards such packets to the UE 20 (Operation S708). However, the base station 11a does not send offload-target data packets (TCP Data/Ack) to the eNB 12 via X2 interface.

### <HO from base station 11a to UTRAN>

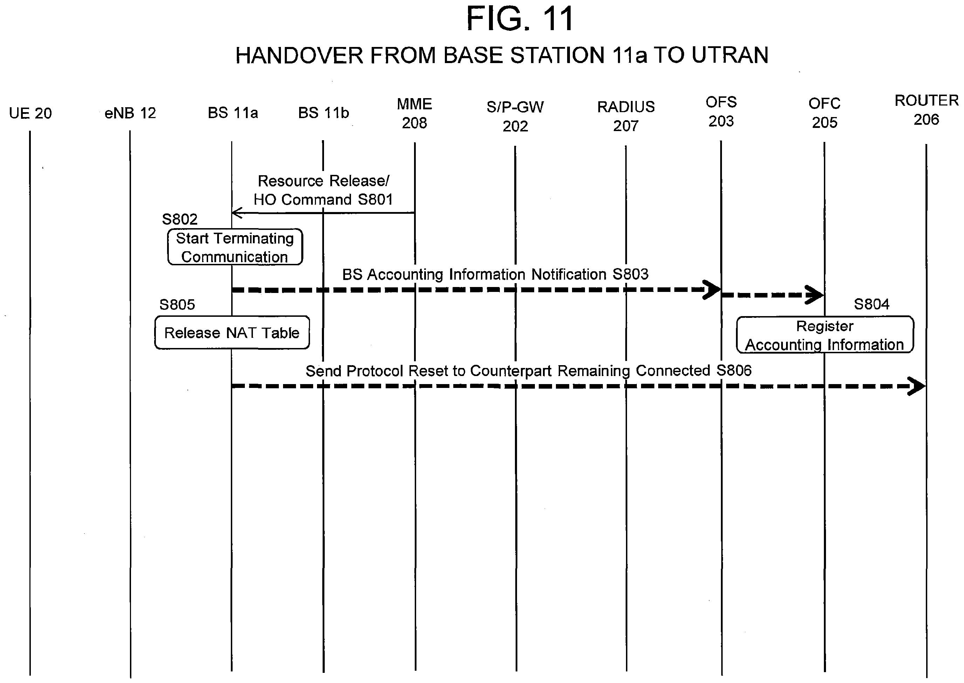

Referring to FIG. 11, when the base station 11a receives a resource release/handover command from the MME 208 (Operation S801), the base station 11a starts communication termination processing at the time of handover to UTRAN (Operation S802). That is, the base station 11a sends a base station accounting information notification including UE information to the OFC 205 (Operation S803), and the OFC 205 processes the base station accounting information notification and registers accounting information (Operation S804). Further, the base station 11a releases the NAT table (Operation S805) and sends a TCP RST packet to the communication counterpart remaining connected to forcefully disconnect therefrom (Operation S806). Thereafter, the UE 20 communicates with the UTRAN network.

### <Communication termination processing>

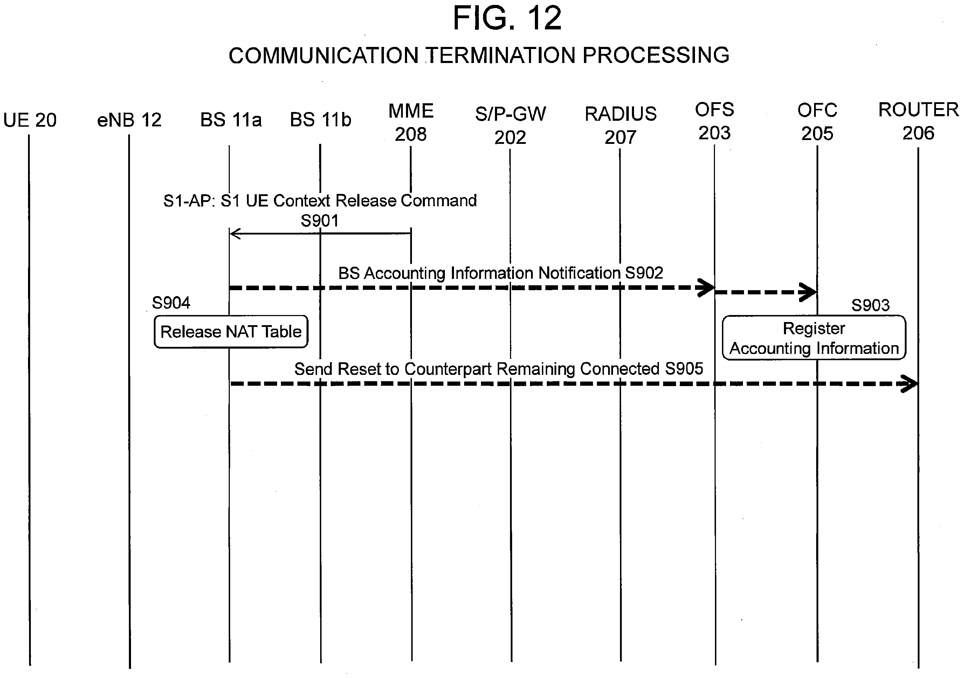

Referring to FIG. 12, when the base station 11a receives an S1-AP: S1 UE context release command from the MME 208 (Operation S901), the base station 11a starts communication termination processing and sends a base station accounting information notification including UE information to the OFC 205 (Operation S902), and the OFC 205 processes the base station accounting information notification and registers accounting information (Operation S903). Further, the base station 11a releases the NAT table (Operation S904) and sends a TCP RST packet to the communication counterpart remaining connected to forcefully disconnect therefrom (Operation S905).

### [Industrial Applicability]

The present invention is applicable to mobile communication systems, in particular, systems including an offload function.

### [Reference Signs List]

- 10, 11, 11a, 11b: Base station
- 12: Base station (eNB)
- 20: Terminal
- 30: Switch
- 40: First network
- 50: Switch
- 51: OpenFlow Switch (OFS)
- 52: OpenFlow Controller (OFC)
- 60: Second network
- 70: Offload path
- 101: NAT table
- 102: Source translation section
- 103: Control section

## Claims

1. A communication system including: a communication apparatus (10) wirelessly connecting to terminals (20); and a network (40), the communication system **characterized by** comprising:
an address translation table (101), comprised in the communication apparatus (10), that is configured to offload a traffic from a terminal (20) to the network (40), wherein the address translation table (101) includes source ports associated respectively with the terminals (20); and
a source translation means (102), comprised in the communication apparatus (10), for translating a source port in the address translation table (101) for each radio bearer by allocating predetermined source port ranges to different radio bearers, wherein the radio bearer is set up between the terminal (20) that is a source of the traffic and the communication apparatus (10) and is determined by a combination of a terminal, an access point name, APN, and a Quality of Service Class Indicator, QCI.

2. The communication system according to claim 1, **characterized by** further comprising a packet counter (104) for counting forwarded packets for each radio bearer.

3. The communication system according to claim 1 or 2, **characterized by** further comprising:
a switch means (50) deployed between the network (40) and another network (60); and
a switch control means (103) that is configured to control the switch means (50) so that the switch means (50) sets up an offload path (70) bypassing the network (40) to offload traffic to be transferred through the network (40),
wherein when offloading the traffic to be transferred through the network (40), the switch means (50) forwards an offload-target packet to the offload path (70).

4. The communication system according to any one of claims 1 to 3, **characterized in that** the address translation table (101) is a NAT (Network Address Translation) table.

5. The communication system according to any one of claims 1 to 4, **characterized in that** the communication apparatus (10) has the address translation table (101) and the source translation means (102).

6. The communication system according to any one of claims 1 to 5, **characterized in that** the communication apparatus (10) is a base station of a radio access network.

7. The communication system according to any one of claims 1 to 6, further comprising a control means (103) which is configured to, when receiving a packet addressed to a terminal (20) from the network (40), identify a radio bearer to which the packet is to be forwarded based on the predetermined source port ranges and a source port number associated with the terminal (20).

8. A communication apparatus (10) in a communication system including a network (40), the communication apparatus (10) **characterized by** comprising:
a communication means that is configured to wirelessly connect to terminals (20);
an address translation table (101) for offloading a traffic from a terminal (20) to the network (40), wherein the address translation table (101) includes source ports associated respectively with the terminals (20); and
a source translation means (102) for translating a source port in the address translation table (101) for each radio bearer by allocating predetermined source port ranges to different radio bearers, wherein the radio bearer is set up between the terminal (20) that is a source of the traffic and the communication apparatus (10) and is determined by a combination of a terminal, an access point name, APN, and a Quality of Service Class Indicator, QCI.

9. The communication apparatus (10) according to claim 7, **characterized by** further comprising a packet counter (104) for counting forwarded packets for each radio bearer.

10. The communication apparatus (10) according to claim 8 or 9, **characterized in that** the address translation table (101) is a NAT (Network Address Translation) table.

11. The communication apparatus (10) according to any one of claims 8 to 10, further comprising a control means (103) which is configured to, when receiving a packet addressed to a terminal (20) from the network (40), identify a radio bearer to which the packet is to be forwarded based on the predetermined source port ranges and a source port number associated with the terminal (20).

12. A communication control method for a communication apparatus (10) in a communication system including a network (40), the method **characterized by** comprising:
wirelessly connecting (S301) to terminals (20);
translating a source port in an address translation table (101) for each radio bearer by allocating predetermined source port ranges to different radio bearers, wherein the radio bearer is set up between the terminal (20) that is a source of the traffic and the communication apparatus (10) and is determined by a combination of a terminal, an access point name, APN, and a Quality of Service Class Indicator, QCI, wherein the address translation table (101) includes source ports associated respectively with the terminals (20); and
when the traffic is offload-target traffic, offloading (S408) the traffic to the network (40) by using the address translation table (101).

13. The communication control method for the communication apparatus (10) according to claim 12, **characterized by** further comprising, counting forwarded packets for each of the radio bearers.

14. The communication control method for the communication apparatus (10) according to claim 12 or 13, **characterized in that** the address translation table (101) is a NAT (Network Address Translation) table.

15. The communication control method according to any one of claims 12 to 14, further comprising:
when receiving a packet addressed to a terminal (20) from the network (40), identifying (S410) a radio bearer to which the packet is to be forwarded based on the predetermined source port ranges and a source port number associated with the terminal (20).

## Patentansprüche

1. Kommunikationssystem, das umfasst: eine Kommunikationsvorrichtung (10), die drahtlos mit Endgeräten (20) verbindet; und ein Netzwerk (40), wobei das Kommunikationssystem **dadurch gekennzeichnet ist, dass** es aufweist:
eine Adressübersetzungstabelle (101), die in der Kommunikationsvorrichtung (10) enthalten ist, die konfiguriert ist, um einen Verkehr von einem Endgerät (20) auf das Netzwerk (40) abzuladen, wobei die Adressübersetzungstabelle (101) Quellports umfasst, die jeweils zu den Endgeräten (20) gehören; und
eine Quellübersetzungseinrichtung (102), die in der Kommunikationsvorrichtung (10) enthalten ist, um einen Quellport in der Adressübersetzungstabelle (101) für jeden Funkträger zu übersetzen, indem vorgegebene Quellportbereiche an verschiedene Funkträger zugewiesen werden, wobei der Funkträger zwischen dem Endgerät (20), das eine Quelle des Verkehrs ist, und der Kommunikationsvorrichtung (10) aufgebaut wird und durch eine Kombination eines Endgeräts, eines Zugangspunktnamens APN und einer Dienstklassenqualitätsanzeige QCI bestimmt wird.

2. Kommunikationssystem nach Anspruch 1, **dadurch gekennzeichnet, dass** es ferner einen Paketzähler (104) zum Zählen weitergeleiteter Pakete für jeden Funkträger aufweist.

3. Kommunikationssystem nach Anspruch 1 oder 2, **dadurch gekennzeichnet, dass** es ferner aufweist:
eine Schalteinrichtung (50), die zwischen dem Netzwerk (40) und einem anderen Netzwerk (60) eingesetzt ist; und
eine Schaltsteuereinrichtung (103), die konfiguriert ist, um die Schalteinrichtung (50) derart zu steuern, dass die Schalteinrichtung (50) einen Abladeweg (70) einrichtet, der das Netzwerk (40) umgeht, um Verkehr, der durch das Netzwerk (40) überführt werden soll, abzuladen,
wobei die Schalteinrichtung (50), wenn der Verkehr, der durch das Netzwerk (40) überführt werden soll, abgeladen wird, ein Abladezielpaket an den Abladeweg (70) weiterleitet.

4. Kommunikationssystem nach einem der Ansprüche 1 bis 3,
**dadurch gekennzeichnet, dass** die Addressübersetzungstabelle (101) eine NAT- (Netzwerkadressübersetzungs-) Tabelle ist.

5. Kommunikationssystem nach einem der Ansprüche 1 bis 4,
**dadurch gekennzeichnet, dass** die Kommunikationsvorrichtung (10) die Adressübersetzungstabelle (101) und die Quellübersetzungseinrichtung (102) hat.

6. Kommunikationssystem nach einem der Ansprüche 1 bis 5,
**dadurch gekennzeichnet, dass** die Kommunikationsvorrichtung (10) eine Basisstation eines Funkzugangsnetzwerks ist.

7. Kommunikationssystem nach einem der Ansprüche 1 bis 6, das ferner eine Steuereinrichtung (103) aufweist, die konfiguriert ist, um, wenn sie von dem Netzwerk (40) ein an ein Endgerät (20) adressiertes Paket empfängt, basierend auf den vorgegebenen Quellportbereichen und einer Quellportnummer, die zu dem Endgerät (20) gehört, einen Funkträger zu identifizieren, an den das Paket weitergeleitet werden soll.

8. Kommunikationsvorrichtung (10) in einem Kommunikationssystem, das ein Kommunikationsnetzwerk (40) umfasst, wobei die Kommunikationsvorrichtung (10) **dadurch gekennzeichnet ist, dass** sie aufweist:
eine Kommunikationseinrichtung, die konfiguriert ist, um drahtlos mit Endgeräten (20) zu verbinden;
eine Adressübersetzungstabelle (101) zum Abladen von Verkehr von einem Endgerät (20) auf das Netzwerk (40), wobei die Adressübersetzungstabelle (101) Quellports umfasst, die jeweils zu den Endgeräten (20) gehören; und
eine Quellübersetzungseinrichtung (102) zum Übersetzen eines Quellport in der Adressübersetzungstabelle (101) für jeden Funkträger, indem vorgegebene Quellportbereiche an verschiedene Funkträger zugewiesen werden, wobei der Funkträger zwischen dem Endgerät (20), das eine Quelle des Verkehrs ist, und der Kommunikationsvorrichtung (10) aufgebaut wird und durch eine Kombination eines Endgeräts, eines Zugangspunktnamens APN und einer Dienstklassenqualitätsanzeige QCI bestimmt wird.

9. Kommunikationsvorrichtung (10) nach Anspruch 7, **dadurch gekennzeichnet, dass** es ferner einen Paketzähler (104) zum Zählen weitergeleiteter Pakete für jeden Funkträger aufweist.

10. Kommunikationsvorrichtung (10) nach Anspruch 8 oder 9, **dadurch gekennzeichnet, dass** die Adressübersetzungstabelle (101) eine NAT-(Netzwerkadressübersetzungs-) Tabelle ist.

11. Kommunikationsvorrichtung (10) nach einem der Ansprüche 8 bis 10, die ferner eine Steuereinrichtung (103) aufweist, die konfiguriert ist, um, wenn sie von dem Netzwerk (40) ein an ein Endgerät (20) adressiertes Paket empfängt, basierend auf den vorgegebenen Quellportbereichen und einer Quellportnummer, die zu dem Endgerät (20) gehört, einen Funkträger zu identifizieren, an den das Paket weitergeleitet werden soll.

12. Kommunikationssteuerungsverfahren für eine Kommunikationsvorrichtung (10) in einem Kommunikationssystem, das ein Netzwerk (40) umfasst, wobei das Verfahren **dadurch gekennzeichnet ist, dass** es aufweist:
drahtloses Verbinden (S301) mit Endgeräten (20);
Übersetzen eines Quellport in einer Adressübersetzungstabelle (101) für jeden Funkträger, indem vorgegebene Quellportbereiche an verschiedene Funkträger zugewiesen werden, wobei der Funkträger zwischen dem Endgerät (20), das eine Quelle des Verkehrs ist, und der Kommunikationsvorrichtung (10) aufgebaut wird und durch eine Kombination eines Endgeräts, eines Zugangspunktnamens APN und einer Dienstklassenqualitätsanzeige QCI bestimmt wird,
wobei die Adressübersetzungstabelle (101) Quellports umfasst, die jeweils zu den Endgeräten (20) gehören; und
wenn der Verkehr Abladezielverkehr ist, Abladen (S408) des Verkehrs an das Netzwerk (40) unter Verwendung der Adressübersetzungstabelle (101).

13. Kommunikationssteuerungsverfahren für die Kommunikationsvorrichtung (10) nach Anspruch 12, **dadurch gekennzeichnet, dass** es ferner das Zählen weitergeleiteter Pakete für jeden der Funkträger aufweist.

14. Kommunikationssteuerungsverfahren für die Kommunikationsvorrichtung (10) nach Anspruch 12 oder 13, **dadurch gekennzeichnet, dass** die Addressübersetzungstabelle (101) eine NAT- (Netzwerkadressübersetzungs-) Tabelle ist.

15. Kommunikationssteuerungsverfahren für die Kommunikationsvorrichtung (10) nach einem der Ansprüche 12 bis 14, das ferner aufweist:
wenn von dem Netzwerk (40) ein an ein Endgerät (20) adressiertes Paket empfangen wird, basierend auf den vorgegebenen Quellportbereichen und einer Quellportnummer, die zu dem Endgerät (20) gehört, Identifizieren (S410) eines Funkträgers, an den das Paket weitergeleitet werden soll.

## Revendications

1. Système de communication incluant : un appareil de communication (10) se connectant de manière sans fil à des terminaux (20) ; et un réseau (40), le système de communication **caractérisé en ce qu'**il comprend :
une table de traduction d'adresse (101), comprise dans l'appareil de communication (10), qui est configurée pour décharger un trafic depuis un terminal (20) vers le réseau (40), où la table de traduction d'adresse (101) inclut des ports sources associés respectivement aux terminaux (20) ; et
un moyen de traduction de source (102), compris dans l'appareil de communication (10), pour traduire un port source dans la table de traduction d'adresse (101) pour chaque support radio en allouant des plages de port source prédéterminées à différents supports radio, où le support radio est établi entre le terminal (20) qui est une source du trafic et l'appareil de communication (10) et est déterminé par une combinaison d'un terminal, d'un nom de point d'accès, APN, et d'un Indicateur de Classe de Qualité de Service, QCI.

2. Système de communication selon la revendication 1, **caractérisé en ce qu'**il comprend en outre un compteur de paquets (104) pour compter des paquets réacheminés pour chaque support radio.

3. Système de communication selon la revendication 1 ou 2, **caractérisé en ce qu'**il comprend en outre :
un moyen de commutation (50) déployé entre le réseau (40) et un autre réseau (60) ; et
un moyen de contrôle de commutation (103) qui est configuré pour contrôler le moyen de commutation (50) de sorte que le moyen de commutation (50) établisse un chemin de déchargement (70) contournant le réseau (40) pour décharger un trafic devant être transféré par l'intermédiaire du réseau (40),
dans lequel lors du déchargement du trafic devant être transféré par l'intermédiaire du réseau (40), le moyen de commutation (50) réachemine un paquet cible de déchargement vers le chemin de déchargement (70).

4. Système de communication selon l'une quelconque des revendications 1 à 3, **caractérisé en ce que** la table de traduction d'adresse (101) est une table NAT (Traduction d'Adresse Réseau).

5. Système de communication selon l'une quelconque des revendications 1 à 4, **caractérisé en ce que** l'appareil de communication (10) a la table de traduction d'adresse (101) et le moyen de traduction de source (102).

6. Système de communication selon l'une quelconque des revendications 1 à 5, **caractérisé en ce que** l'appareil de communication (10) est une station de base d'un réseau d'accès radio.

7. Système de communication selon l'une quelconque des revendications 1 à 6, comprenant en outre un moyen de contrôle (103) qui est configuré pour, lors de la réception d'un paquet adressé à un terminal (20) en provenance du réseau (40), identifier un support radio vers lequel le paquet doit être réacheminé sur la base des plages de port source prédéterminées et d'un numéro de port source associé au terminal (20).

8. Appareil de communication (10) dans un système de communication incluant un réseau (40), l'appareil de communication (10) **caractérisé en ce qu'**il comprend :
un moyen de communication qui est configuré pour se connecter de manière sans fil à des terminaux (20) ;
une table de traduction d'adresse (101) pour décharger un trafic depuis un terminal (20) vers le réseau (40), où la table de traduction d'adresse (101) inclut des ports sources associés respectivement aux terminaux (20) ; et
un moyen de traduction de source (102) pour traduire un port source dans la table de traduction d'adresse (101) pour chaque support radio en allouant des plages de port source prédéterminées à différents supports radio, où le support radio est établi entre le terminal (20) qui est une source du trafic et l'appareil de communication (10) et est déterminé par une combinaison d'un terminal, d'un nom de point d'accès, APN, et d'un Indicateur de Classe de Qualité de Service, QCI.

9. Appareil de communication (10) selon la revendication 7, **caractérisé en ce qu'**il comprend en outre un compteur de paquets (104) pour compter des paquets réacheminés pour chaque support radio.

10. Appareil de communication (10) selon la revendication 8 ou 9, **caractérisé en ce que** la table de traduction d'adresse (101) est une table NAT (Traduction d'Adresse Réseau).

11. Appareil de communication (10) selon l'une quelconque des revendications 8 à 10, comprenant en outre un moyen de contrôle (103) qui est configuré pour, lors de la réception d'un paquet adressé à un terminal (20) en provenance du réseau (40), identifier un support radio vers lequel le paquet doit être réacheminé sur la base des plages de port source prédéterminées et d'un numéro de port source associé au terminal (20).

12. Procédé de contrôle de communication pour un appareil de communication (10) dans un système de communication incluant un réseau (40), le procédé **caractérisé en ce qu'**il comprend :
la connexion sans fil (S301) à des terminaux (20) ;
la traduction d'un port source dans une table de traduction d'adresse (101) pour chaque support radio en allouant des plages de port source prédéterminées à différents supports radio, où le support radio est établi entre le terminal (20) qui est une source du trafic et l'appareil de communication (10) et est déterminé par une combinaison d'un terminal, d'un nom de point d'accès, APN, et d'un Indicateur de Classe de Qualité de Service, QCI,
dans lequel la table de traduction d'adresse (101) inclut des ports sources associés respectivement aux terminaux (20) ; et
lorsque le trafic est un trafic cible de déchargement, le déchargement (S408) du trafic vers le réseau (40) en utilisant la table de traduction d'adresse (101).

13. Procédé de contrôle de communication pour l'appareil de communication (10) selon la revendication 12, **caractérisé en ce qu'**il comprend en outre, le comptage de paquets réacheminés pour chacun des supports radio.

14. Procédé de contrôle de communication pour l'appareil de communication (10) selon la revendication 12 ou 13, **caractérisé en ce que** la table de traduction d'adresse (101) est une table NAT (Traduction d'Adresse Réseau).

15. Procédé de contrôle de communication selon l'une quelconque des revendications 12 à 14, comprenant en outre :
lors de la réception d'un paquet adressé à un terminal (20) en provenance du réseau (40), l'identification (S410) d'un support radio vers lequel le paquet doit être réacheminé sur la base des plages de port source prédéterminées et d'un numéro de port source associé au terminal (20).
